# EUROPEAN PATENT SPECIFICATION

(11) **EP 3 933 495 B1**
(45) Date of publication and mention of the grant of the patent: **07.08.2024**
(21) Application number: 21175582.2
(22) Date of filing: 25.05.2021
(51) Int. Cl.: G02F 1/13357

(54) **BACKLIGHT MODULE AND DISPLAY DEVICE**
RÜCKBELEUCHTUNGSMODUL UND ANZEIGEVORRICHTUNG
MODULE DE RÉTROÉCLAIRAGE ET DISPOSITIF D'AFFICHAGE

(30) Priority: 03.07.2020 US 202063047917 P; 18.08.2020 US 202063066825 P; 06.01.2021 CN 202110012017
(43) Date of publication of application: 05.01.2022
(73) Proprietor: InnoLux Corporation, Chu-Nan, Miao-Li County 35053 (TW)
(72) Inventor: Lin, Jia-Huei, Miao-Li County 35053 (TW); Ting, Chin-Lung, Miao-Li County 35053 (TW); Mao, Li-Wei, Miao-Li County 35053 (TW); Lin, Fang-Ho, Miao-Li County 35053 (TW); Chen, Chieh Ying, Miao-Li County 35053 (TW)
(74) Representative: Becker, Eberhard

(56) References cited:
- JP-A- 2013 182 076
- JP-B2- 4 364 184
- US-A1- 2014 340 614
- US-A1- 2016 018 698
- US-A1- 2018 240 420

## Description

### BACKGROUND

### [Technical Field]

The disclosure relates to a backlight module and a display device, and more particularly, to a backlight module and a display device which can improve the mura or exhibit a more uniform brightness.

### [Description of Related Art]

Display panels have been widely applied to electronic devices such as mobile phones, televisions, monitors, tablet computers, car displays, wearable devices, and desktop computers. With the vigorous development of electronic products, the requirements for the display quality of electronic products also increase, such that the electronic devices used for display are constantly improving towards larger or higher-resolution display effects.

Patent literature JP 2013-182076 A discloses a video display device including: a housing, a display section, an element, a control section and a substrate; in which the display section includes a display screen and at least one part is stored in the housing; the light emission section emits light radiating the display section; the element switches the existence of power supply to the light emission section; the control section controls the element to switch the existence of power supply to the element; the substrate includes a first surface and a second surface positioned on the opposite side of the first surface; and the substrate is provided with a light emission section and the element.

Patent literature US 2018/0240420 A1 discloses a video display device including: a display panel that displays an image based on an image signal; a light source substrate disposed on a rear side of the display panel; a plurality of light emitting elements each of which is attached to a surface of the light source substrate on a side toward the display panel to emit light to the display panel; a reflection sheet; and driver elements that drive each of the plurality of light emitting elements; in which partitioning wall portions are formed in the reflection sheet, each of partitioning wall portions separates adjacent ones of the light emitting elements, and expands toward the display panel; the reflection sheet covers the surface of the light source substrate on the side toward the display panel except for portions provided with the light emitting elements.

Patent literature US 2014/0340614 A1 discloses a light-emitting device including: a first planar member having light sources; a second planar member being parallel to the first planar member; and a reflecting member reflecting light beams from the respective light sources to the second planar member, the reflecting member being provided on an inner side of a polygon which is defined by the light sources as vertices thereof, wherein the reflecting member having a polygonal pyramidal shape with a bottom surface being parallel to the first planar member satisfies at least one of: a condition that a diffusion distance is from 0.8 to 1.3 when a length of each side of a polygon of the bottom surface is 1; and a condition that an angle between a side surface of the polygonal pyramid and the bottom surface is from 40 degree to 60 degree.

Patent literature JP 2007-073374 A discloses a reflecting plate having the bend part attached to a chassis with a clip and a part of which contacts the clip, perforations are provided in a part not in contact with the clip of the bend part, and a groove is provided in the part in contact with the clip without providing perforations.

Patent literature US 2016/0018698 A1 discloses a backlight module including: a back plate, light sources, protrusive pieces and a reflective sheet; in which the light sources are disposed on the back plate; the protrusive pieces protrude from the back plate; each of the protrusive pieces is located between at least two adjacent light sources; the reflective sheet is disposed on the back plate and has through holes; each of the light sources passes through a corresponding through hole.

### SUMMARY

The disclosure provides a backlight module and a display device which can improve the mura or exhibit a more uniform brightness.

According to the claimed invention, a backlight module according to claim 1 is provided. The backlight module inter alia includes substrate, a light-emitting element, a circuit element, and a reflective sheet. The light-emitting element is bonded onto the substrate. The circuit element is bonded onto the substrate and electrically connected to the light-emitting element. The reflective sheet is disposed on the substrate and has a first opening. The first opening at least exposes the light-emitting element. At least a portion of a surface of the circuit element is made reflective.

According to an embodiment of the disclosure, a display device includes the above backlight module and a display panel disposed on the backlight module.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic perspective view showing a display device according to an embodiment of the disclosure.
FIG. 2A is a schematic top view showing a protrusion of the display device of FIG. 1.
FIG. 2B to FIG. 2D are schematic top views showing the protrusion of the display device according to multiple embodiments of the disclosure.
FIG. 3 is a schematic perspective view showing a display device according to another embodiment of the disclosure.

### DESCRIPTION OF THE EMBODIMENTS

The disclosure may be understood by referring to the following detailed description with reference to the accompanying drawings. It is noted that for comprehension of the reader and simplicity of the drawings, in the drawings of the disclosure, only a part of the electronic device is shown, and specific components in the drawings are not necessarily drawn to scale. Moreover, the quantity and the size of each component in the drawings are only schematic and are not intended to limit the scope of the disclosure.

In the following specification and claims, the terms "having", "including", "comprising" etc. are open-ended terms, so they should be interpreted to mean "including but not limited to ...".

It should be understood that when a component or a film layer is described as being "on" or "connected to" another component or film layer, it may be directly on or connected to the another component or film layer, or there is an intervening component or film layer therebetween (i.e., being indirectly on or indirectly connected). Conversely, when a component or film layer is described as being "directly on" or "directly connected to" another component or film layer, there is no intervening component or film layer therebetween.

The terms such as "first", "second", "third", etc. may be used to describe components, but the components should not be limited by these terms. The terms are only intended to distinguish a component from another component in the specification. It is possible that the claims do not use the same terms and replace the terms with "first", "second", "third" etc. according to the sequence declared in the claims. Accordingly, in the specification, a first component may be a second component in the claims.

In some embodiments of the disclosure, unless specifically defined, terms related to bonding and connection such as "connect", "interconnect", etc. may mean that two structures are in direct contact, or that two structures are not in direct contact and another structure is provided therebetween. The terms related to bonding and connection may also cover cases where two structures are both movable or two structures are both fixed. In addition, the term "couple" includes any direct and indirect electrical connection means.

In the disclosure, the length and width may be measured by an optical microscope, and the height and thickness may be measured based on a cross-sectional image in an electron microscope, but the disclosure is not limited thereto. In addition, there may be a certain error between any two values or directions used for comparison.

In the disclosure, the electronic device may include a display device, an antenna device (e.g., a liquid crystal antenna), a sensing device, a light-emitting device, a touch device, or a splicing device, but is not limited thereto. The electronic device may include a bendable or flexible electronic device. The shape of the electronic device may be rectangular, circular, polygonal, a shape with curved edges, or other suitable shapes. The display device may include, for example, a light-emitting diode (LED), a liquid crystal, a fluorescence, a phosphor, a quantum dot (QD), other suitable materials, or a combination of the above, but is not limited thereto. The light-emitting diode may include, for example, an organic light-emitting diode (OLED), an inorganic light-emitting diode (LED), a mini LED, a micro LED or a quantum dot LED (e.g., QLED or QDLED), other suitable materials, or any combination of the above, but is not limited thereto. The display device may include, for example, a splicing display device, but is not limited thereto. The antenna device may include, for example, a liquid crystal antenna, but is not limited thereto. The antenna device may include, for example, an antenna splicing device, but is not limited thereto. It is noted that the electronic device may be any combination of the above, but is not limited thereto. The electronic device may have peripheral systems such as a driving system, a control system, a light source system, a rack system, etc. to support a display device, an antenna device, or a splicing device. Hereinafter, a display device will be described to illustrate the content of the disclosure, but the disclosure is not limited thereto.

In the disclosure, the features in multiple different embodiments descried below may be replaced, combined, and/or mixed to form other embodiments without departing from the spirit of the disclosure. The features of the embodiments may be arbitrarily mixed and combined as long as they do not depart from or conflict with the spirit of the disclosure.

Reference will now be made in detail to the exemplary embodiments of the disclosure, examples of which are illustrated in the accompanying drawings. Whenever possible, the same reference numerals are used to represent the same or similar parts in the accompanying drawings and description.

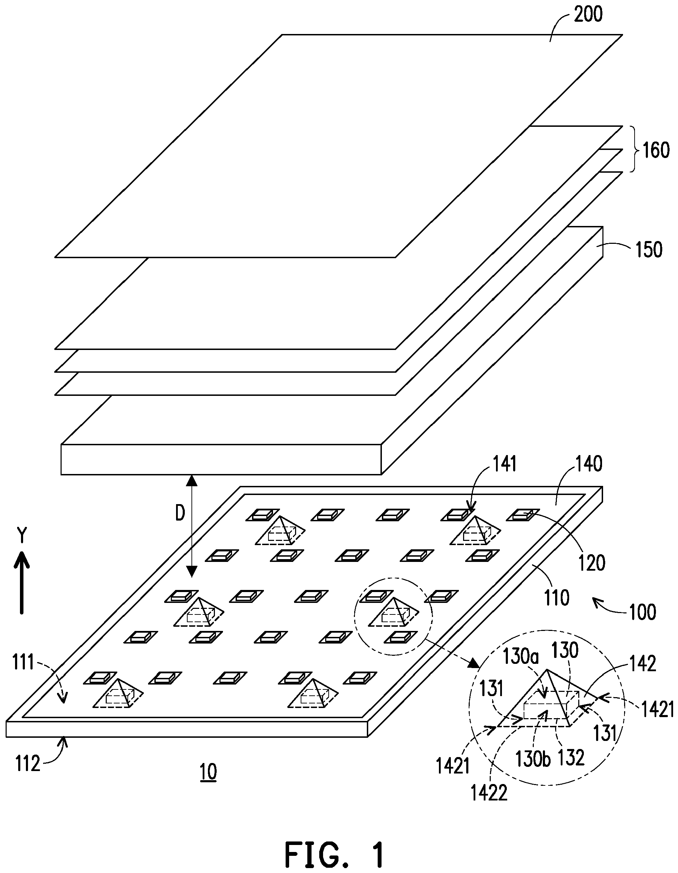

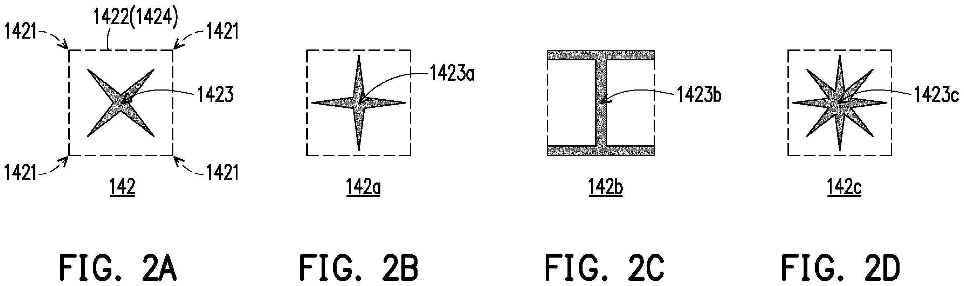

FIG. 1 is a schematic perspective view showing a display device according to an embodiment of the disclosure. FIG. 2A is a schematic top view showing a protrusion of the display device of FIG. 1. FIG. 2B to FIG. 2D are schematic top views showing the protrusion of the display device according to multiple embodiments of the disclosure. Referring to FIG. 1 first, a display device 10 of this embodiment includes a backlight module 100 and a display panel 200. The display panel 200 is disposed on the backlight module 100 so that the backlight module 100 may provide light to the display panel 200. In some embodiments, the backlight module 100 may be a direct-type backlight module, so that the light emitted by the backlight module 100 can be transmitted toward the display panel 200.

Referring to FIG. 1 again, the backlight module 100 of this embodiment includes a substrate 110, a light-emitting element 120, a circuit element 130, and a reflective sheet 140. In this embodiment, the substrate 110 has a first surface 111 and a second surface 112 opposite to the first surface 111. The substrate 110 may be, for example, a circuit board and may include a single layer or multiple layers of circuit wirings. The substrate 110 may also be, for example, an active driving substrate and may include driving circuits (not shown) such as transistors, scan lines, and data lines to thereby drive the light-emitting element 120 to emit light. The substrate 110 may include a rigid substrate, a flexible substrate, or a combination of the above. For example, the material of the substrate 110 may include glass, quartz, sapphire, ceramics, polycarbonate (PC), polyimide (PI), polyethylene terephthalate (PET), other suitable substrate materials, or a combination of the above, but is not limited thereto.

In this embodiment, the light-emitting element 120 are bonded onto the first surface 111 of the substrate 110. Specifically, the light-emitting element 120 may include an electrode pad (not shown) disposed on the light-emitting element 120, and the substrate 110 may include a pad (not shown) and another pad (not shown) disposed on the substrate 110. The light-emitting element 120 may be bonded onto the substrate 110 via the pad, so that the light-emitting element 120 can be electrically connected to the substrate 110 via the electrode pad and the pad. In this embodiment, the light-emitting element 120 may include, for example, light-emitting diodes of different colors, such as a red light-emitting diode, a green light-emitting diode, a blue light-emitting diode, and/or a white light-emitting diode, but is not limited thereto. The light-emitting element 120 may also include a blue light-emitting diode or an ultraviolet light-emitting diode with a light conversion material, and the light conversion material may include, for example, a quantum dot, a fluorescence, a phosphor, other suitable materials, or a combination of the above, but is not limit thereto.

In this embodiment, the circuit element 130 is bonded onto the first surface 111 of the substrate 110 and electrically connected to the light-emitting element 120. Specifically, the circuit element 130 may include, for example, a completed non-light-emitting element such as a driving IC, a gate driver, a capacitor, and/or a resistor, but is not limited thereto. The circuit element 130 may include, for example, an integrated circuit manufactured by a semiconductor process, or an active driving circuit manufactured by a thin film process. The circuit element 130 may be bonded onto and electrically connected to the substrate 110 via the another pad of the substrate 110, so that the circuit element 130 can be electrically connected to the light-emitting element 120 via the another pad of the substrate 110 and the circuit wiring or driving circuit in the substrate 110, so as to control and drive the light-emitting element 120 to emit light. In this embodiment, since the circuit element 130 and the light-emitting element 120 are both disposed on the same surface (e.g., the first surface 111) of the substrate 110, compared to a backlight module in which the circuit element and the light-emitting element are respectively disposed on different surfaces (e.g., a first surface and a second surface opposite to each other) of the substrate, the backlight module 100 of this embodiment may have a smaller thickness and may conform to a thin design.

In addition, in this embodiment, the circuit element 130 has a top surface 130a facing away from the first surface 111 of the substrate 110 and a side surface 130b. The height of the circuit element 130 is, for example, greater than the height of the light-emitting element 120, but is not limited thereto. The height of the circuit element 130 is, for example, the maximum height of the circuit element 130 measured along a normal direction Y of the substrate 110, and the height of the light-emitting element 120 is, for example, the maximum height of the light-emitting element 120 measured along the normal direction Y of the substrate 110.

In this embodiment, the reflective sheet 140 is disposed on the first surface 111 of the substrate 110, so that the reflective sheet 140 can cover a non-light emitting region and/or a non-light-emitting element on the substrate 110. The material of the reflective sheet 140 may include, for example, a white polyester, other suitable reflective materials, or a combination of the above, but is not limited thereto. The reflective sheet 140 has a first opening 141 and a protrusion 142. The first opening 141 at least exposes the light-emitting element 120. The protrusion 142 may be a portion of the reflective sheet 140, the protrusion 142 and the reflective sheet 140 may be integrally formed, and the protrusion 142 and the reflective sheet 140 may be seamlessly connected, but the disclosure is not limited thereto. The protrusion 142 is disposed corresponding to the position of the circuit element 130, so that the protrusion 142 can cover the circuit element 130 and at least a portion of the surface (e.g., the top surface 130a and the side surface 130b) of the circuit element 130 can be made reflective due to the coverage of the protrusion 142. Accordingly, the mura resulting from the exposure of the circuit element of the display device can be improved, or the display device can exhibit a more uniform brightness.

For example, in this embodiment, the shape of the circuit element 130 is, for example, a square, and the bottom of the circuit element 130 has four vertices 131 and four edges 132. The shape of the protrusion 142 is, for example, a pyramid shape, and the bottom of the protrusion 142 also has four vertices 1421 and four edges 1422. The four edges 1422 of the protrusion 142 may respectively correspond to and be substantially parallel to the four edges 132 of the circuit element 130, and the four vertices 1421 of the bottom of the protrusion 142 may respectively correspond to the four vertices 131 of the circuit element 130, so that the protrusion 142 can better cover the circuit element 130. Furthermore, when the edges 1422 of the protrusion 142 can respectively correspond to and be substantially parallel to the edges 132 of the circuit element 130, the heat generated by the circuit element 130 can be more evenly transferred to the edges 1422 of the protrusion 142 through the edges 132, so as to prevent occurrence of folds at the edges 1422 of the protrusion 142 due to uneven heating.

Referring to FIG. 2A, which is not according to the claimed invention, in the schematic top view of the protrusion 142 of this embodiment, the protrusion 142 further has an opening 1423 and a perforated line 1424. The opening 1423 may have an X-shaped pattern formed of two crossing slits. The extending directions of the two crossing slits are both different from the extending directions of the four edges 132 of the circuit element 130. The extending directions of the two crossing slits cross the four vertices 1421 of the protrusion 142. Therefore, the protrusion 142 can better cover the circuit element 130.

According to the claimed invention, the perforated line 1424 is provided corresponding to the edges 1422 of the protrusion 142. The perforated line 1424 may be regarded as multiple discontinuous indentations formed on the edges 1422 of the protrusion 142, as shown by the dotted lines in FIG. 2A. In this embodiment, with the design of the perforated line 1424 (i.e., multiple discontinuous indentations), the edges 1422 of the protrusion 142 can be more closely covered or fixed on the substrate 110. For example, in the case of a protrusion without a perforated line, when the protrusion is arched due to heating of the circuit element, the arching range may expand beyond the edges of the protrusion and extend to the reflective sheet around the opening, so that the light-emitting element in the opening is shielded by the arched reflective sheet, thus resulting in mura. In contrast, in the case of the protrusion 142 provided with the perforated line 1424 in this embodiment, with the perforated line 1424, the edges 1422 of the protrusion 142 can be reliably fixed on the substrate 110. Therefore, the arching range does not expand beyond the edges 1422 of the protrusion 142, which thus reduces shielding of the light-emitting element and occurrence of the mura resulting from the arching of the reflective sheet.

The shape of the protrusion 142 of this embodiment may be, for example, a pyramid shape, and the opening 1423 of the protrusion 142 may have, for example, an X-shaped pattern formed of two crossing slits. As shown in FIG. 2B which is according to the claimed invention, the shape of a protrusion 142a is a two-by-two-grid shape, and an opening 1423a of the protrusion 142a has a cross pattern formed of two crossing slits. In some embodiments, which are according to the claimed invention and as shown in FIG. 2C, the shape of a protrusion 142b is an I-shape, and an opening 1423b of the protrusion 142b has, an I-shaped pattern formed of three crossing slits. In some embodiments, which are according to the claimed invention and as shown in FIG. 2D, the shape of a protrusion 142c is a star-shape, and an opening 1423c of the protrusion 142c has a star-shaped pattern formed of four crossing slits.

Referring to FIG. 1 again, in this embodiment, the backlight module 100 may further include a diffuser 150 and an optical film 160. The diffuser 150 is disposed on the substrate 110 and located between the display panel 200 and the substrate 110. A distance D is present between the diffuser 150 and the substrate 110. The distance D is, for example, less than or equal to 5 millimeters (mm), so that the backlight module 100 and the display device 10 of this embodiment can conform to a thin design, but the disclosure is not limited thereto. The distance D is, for example, the maximum distance measured along the normal direction Y of the substrate 110 between the diffuser 150 and the substrate 110. The optical film 160 is disposed on the diffuser 150 and located between the display panel 200 and the diffuser 150. The optical film 160 may include a prism sheet, a diffusion film, and a brightness enhancement film, but is not limited thereto.

In brief, in the backlight module 100 and the display device 10 of the embodiment of the disclosure, since the circuit element 130 and the light-emitting element 120 are both disposed on the same surface (e.g., the first surface 111) of the substrate 110, compared to a backlight module in which the circuit element and the light-emitting element are respectively disposed on different surfaces (e.g., a first surface and a second surface opposite to each other) of the substrate, the backlight module 100 and the display device 10 of this embodiment may have a smaller thickness or may conform to a thin design. In addition, the approach of covering the circuit element 130 by the protrusion 142 of the reflective sheet 140 can improve the mura of the display device resulting from the exposure of the circuit element or can provide a more uniform brightness in the display device.

Other embodiments will be provided and described below. It is noted herein that the reference numerals and part of the descriptions of the above embodiment apply to the following embodiments, where the same numerals are used to represent the same or similar components, and descriptions of the same technical contents are omitted. Reference may be made to the above embodiment for the descriptions of the omitted contents, which will not be repeated in the following embodiments.

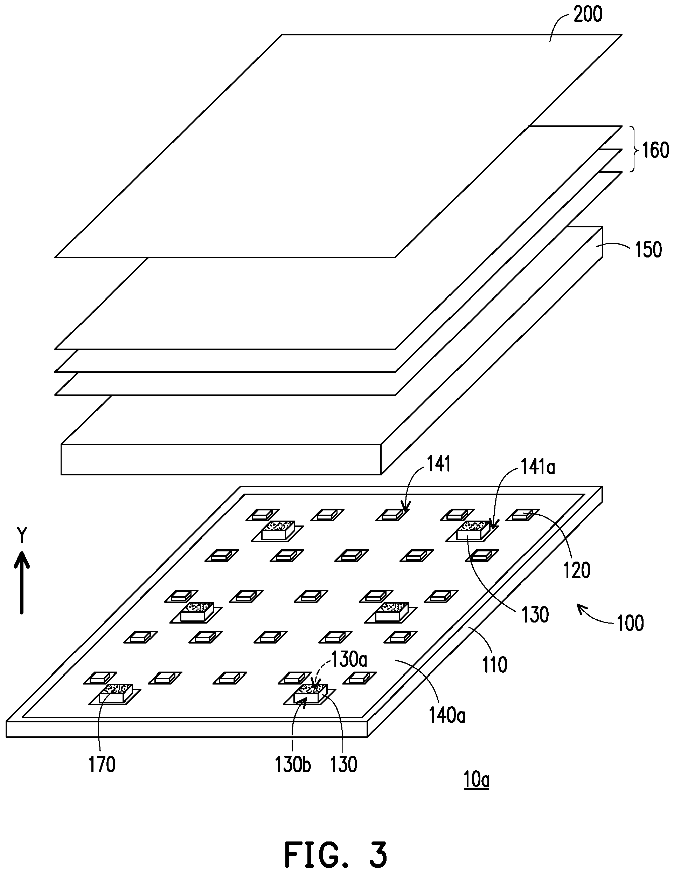

FIG. 3 is a schematic perspective view showing a display device according to another embodiment of the disclosure, not according to the claimed invention. Referring to FIG. 1 and FIG. 3 at the same time, a display device 10a of this embodiment is substantially similar to the display device 10 of FIG. 1, so the same and similar components in the two embodiments will not be repeatedly described herein. The display device 10a of this embodiment is different from the display device 10 mainly in that, in the display device 10a of this embodiment, a reflective sheet 140a does not have a protrusion, but the reflective sheet 140a further has a second opening 141a.

Specifically, referring to FIG. 3, the reflective sheet 140a has the second opening 141a, and the second opening 141a may expose the top surface 130a and the side surface 130b of the circuit element 130. In addition, in this embodiment, the backlight module 100 further includes a reflective material 170. The reflective material 170 may be, for example, a white glue, a white paint, other suitable reflective materials, or a combination of the above, but is not limited thereto. The reflective material 170 may be provided and coated on the top surface 130a of the circuit element 130, so that at least a portion of the surface (e.g., the top surface 130a) of the circuit element 130 is made reflective. Accordingly, the mura of the display device resulting from the exposure of the circuit element can be improved, or the display device can exhibit a more uniform brightness.

In summary of the above, in the backlight module and the display device of the embodiment of the disclosure, since the circuit element and the light-emitting element are both disposed on the same surface (e.g., the first surface) of the substrate, compared to a backlight module in which the circuit element and the light-emitting element are respectively disposed on different surfaces (e.g., a first surface and a second surface opposite to each other) of the substrate, the backlight module and the display device of this embodiment can have a smaller thickness or can conform to a thin design. In addition, the approach of covering the circuit element by the protrusion of the reflective sheet, or the approach of coating the top surface of the circuit element with the reflective material can improve the mura of the display device resulting from the exposure of the circuit element or can provide a more uniform brightness in the display device.

## Claims

1. A backlight module (100), comprising:
a substrate (110);
a light-emitting element (120) bonded onto the substrate (110);
a circuit element (130) bonded onto the substrate (110) and electrically connected to the light-emitting element (120); and
a reflective sheet (140, 140a) disposed on the substrate (110) and having a first opening (141),
wherein the first opening (141) at least exposes the light-emitting element (120),
wherein the reflective sheet (140, 140a) further comprises a protrusion (142), the protrusion (142) is disposed corresponding to a position of the circuit element (130), and the protrusion (142) covers the circuit element (130),
**characterized in that**
the protrusion (142) has four perforated lines, and the four perforated lines are provided corresponding to four edges of the protrusion (142),
wherein the protrusion (142) has an opening (1423), the opening (1423) is formed of two crossing slits, and extending directions of the two crossing slits are respectively parallel to extending directions of two perforated lines in a top view of the backlight module (100).

2. The backlight module (100) according to claim 1, wherein the perforated lines are multiple discontinuous indentations formed on the edges of the protrusion (142).

3. The backlight module (100) according to claim 1, wherein two edges of the protrusion (142) correspond to and are parallel to the two edges of the circuit element (130).

4. The backlight module (100) according to claim 1, wherein the protrusion (142) and the reflective sheet (140) are integrally formed.

5. The backlight module (100) according to any of claims 1 to 4, wherein the circuit element (130) comprises a driving IC, a gate driver, a capacitor, or a resistor.

6. The backlight module (100) according to any of claims 1 to 5, wherein the circuit element (130) and the light-emitting element (120) are disposed on a same surface of the substrate (110).

7. The backlight module (100) according to any of claims 1 to 6, wherein a material of the reflective sheet (140, 140a) is a white polyester.

8. The backlight module (100) according to any of claims 1 to 7, wherein the substrate (110) comprises a pad and another pad, the light-emitting element (120) is bonded onto the substrate (110) via the pad, and the circuit element (130) is bonded onto the substrate (110) via the another pad.

9. A display device (10, 10a) comprising:
the backlight module (100) according to claim 1, and
a display panel (200) disposed on the backlight module (100).

10. The display device (10, 10a) according to claim 9, wherein the backlight module (100) further comprises a diffuser (150) and an optical film (160), wherein the diffuser (150) is disposed on the substrate (110), and the optical film (160) is disposed on the diffuser (150).

11. The display device (10, 10a) according to claim 10, wherein the diffuser (150) is located between the display panel (200) and the substrate (110), and a distance between the diffuser (150) and the substrate (110) is less than or equal to 5 mm.

## Patentansprüche

1. Rückbeleuchtungsmodul (100), umfassend:
ein Substrat (110);
ein lichtemittierendes Element (120), das auf das Substrat (110) gebondet ist;
ein Schaltungselement (130), das auf das Substrat (110) gebondet und elektrisch mit dem lichtemittierenden Element (120) verbunden ist; und
ein reflektierendes Blatt (140, 140a), das auf dem Substrat (110) angeordnet ist und eine erste Öffnung (141) aufweist,
wobei die erste Öffnung (141) wenigstens das lichtemittierende Element (120) freilegt,
wobei das reflektierende Blatt (140, 140a) ferner einen Vorsprung (142) aufweist, der Vorsprung (142) entsprechend einer Position des Schaltungselements (130) angeordnet ist und der Vorsprung (142) das Schaltungselement (130) abdeckt,
**dadurch gekennzeichnet, dass**
der Vorsprung (142) vier perforierte Linien aufweist, und die vier perforierten Linien entsprechend vier Kanten des Vorsprungs (142) bereitgestellt sind,
wobei der Vorsprung (142) eine Öffnung (1423) aufweist, die Öffnung (1423) aus zwei sich kreuzenden Schlitzen gebildet ist und die Erstreckungsrichtungen der beiden sich kreuzenden Schlitze jeweils parallel zu den Erstreckungsrichtungen der beiden perforierten Linien in einer Draufsicht auf das Rückbeleuchtungsmodul (100) sind.

2. Rückbeleuchtungsmodul (100) gemäß Anspruch 1, wobei die perforierten Linien aus mehreren diskontinuierlichen Vertiefungen sind, die an den Kanten des Vorsprungs (142) ausgebildet sind.

3. Rückbeleuchtungsmodul (100) gemäß Anspruch 1, wobei zwei Kanten des Vorsprungs (142) den beiden Kanten des Schaltungselements (130) entsprechen und parallel zu diesen verlaufen.

4. Rückbeleuchtungsmodul (100) gemäß Anspruch 1, wobei der Vorsprung (142) und das reflektierende Blatt (140) einstückig ausgebildet sind.

5. Rückbeleuchtungsmodul (100) gemäß einem der Ansprüche 1 bis 4, wobei das Schaltungselement (130) einen Treiber-IC, einen Gate-Treiber, einen Kondensator oder einen Widerstand umfasst.

6. Rückbeleuchtungsmodul (100) gemäß einem der Ansprüche 1 bis 5, wobei das Schaltungselement (130) und das lichtemittierende Element (120) auf einer gleichen Fläche des Substrats (110) angeordnet sind.

7. Rückbeleuchtungsmodul (100) gemäß einem der Ansprüche 1 bis 6, wobei ein Material des reflektierenden Blatts (140, 140a) ein weißer Polyester ist.

8. Rückbeleuchtungsmodul (100) gemäß einem der Ansprüche 1 bis 7, wobei das Substrat (110) ein Pad und ein weiteres Pad umfasst, das lichtemittierende Element (120) über das Pad auf das Substrat (110) gebondet ist und das Schaltungselement (130) über das weitere Pad auf das Substrat (110) gebondet ist.

9. Anzeigevorrichtung (10, 10a), umfassend:
das Rückbeleuchtungsmodul (100) gemäß Anspruch 1, und
ein Anzeigefeld (200), das auf dem Rückbeleuchtungsmodul (100) angeordnet ist.

10. Anzeigevorrichtung (10, 10a) gemäß Anspruch 9, wobei das Rückbeleuchtungsmodul (100) ferner einen Diffusor (150) und einen optischen Film (160) umfasst, wobei der Diffusor (150) auf dem Substrat (110) angeordnet ist und der optische Film (160) auf dem Diffusor (150) angeordnet ist.

11. Anzeigevorrichtung (10, 10a) gemäß Anspruch 10, wobei der Diffusor (150) sich zwischen dem Anzeigefeld (200) und dem Substrat (110) befindet und ein Abstand zwischen dem Diffusor (150) und dem Substrat (110) kleiner als oder gleich 5 mm ist.

## Revendications

1. Module de rétroéclairage (100) comprenant :
un substrat (110) ;
un élément émetteur de lumière (120) collé sur le substrat (110) ;
un élément de circuit (130) collé sur le substrat (110) et électriquement relié à l'élément émetteur de lumière (120) ; et
une feuille réfléchissante (140, 140a) disposée sur le substrat (110) et comportant une première ouverture (141),
dans lequel la première ouverture (141) expose au moins l'élément émetteur de lumière (120),
dans lequel la feuille réfléchissante (140, 140a) comprend en outre une protubérance (142), la protubérance (142) est disposée de manière à correspondre à une position de l'élément de circuit (130), et la protubérance (142) recouvre l'élément de circuit (130),
**caractérisé en ce que**
la protubérance (142) comporte quatre lignes perforées, et les quatre lignes perforées correspondent à quatre bords de la protubérance (142),
dans lequel la protubérance (142) comporte une ouverture (1423), l'ouverture (1423) est formée de deux fentes croisées, et les directions d'extension des deux fentes croisées sont respectivement parallèles aux directions d'extension des deux lignes perforées dans une vue de dessus du module de rétroéclairage (100).

2. Module de rétroéclairage (100) selon la revendication 1, dans lequel les lignes perforées sont de multiples indentations discontinues formées sur les bords de la protubérance (142).

3. Module de rétroéclairage (100) selon la revendication 1, dans lequel deux bords de la protubérance (142) correspondent et sont parallèles aux deux bords de l'élément de circuit (130).

4. Module de rétroéclairage (100) selon la revendication 1, dans lequel la protubérance (142) et la feuille réfléchissante (140) sont formées d'un seul tenant.

5. Module de rétroéclairage (100) selon l'une quelconque des revendications 1 à 4, dans lequel l'élément de circuit (130) comprend un circuit intégré de commande, un pilote de grille, un condensateur ou une résistance.

6. Module de rétroéclairage (100) selon l'une quelconque des revendications 1 à 5, dans lequel l'élément de circuit (130) et l'élément émetteur de lumière (120) sont disposés sur une même surface du substrat (110).

7. Module de rétroéclairage (100) selon l'une quelconque des revendications 1 à 6, dans lequel un matériau de la feuille réfléchissante (140, 140a) est un polyester blanc.

8. Module de rétroéclairage (100) selon l'une quelconque des revendications 1 à 7, dans lequel le substrat (110) comprend un tampon et un autre tampon, l'élément émetteur de lumière (120) est collé sur le substrat (110) par l'intermédiaire du tampon, et l'élément de circuit (130) est collé sur le substrat (110) par l'intermédiaire de l'autre tampon.

9. Dispositif d'affichage (10, 10a) comprenant :
le module de rétroéclairage (100) selon la revendication 1, et
un panneau d'affichage (200) disposé sur le module de rétroéclairage (100).

10. Dispositif d'affichage (10, 10a) selon la revendication 9, dans lequel le module de rétroéclairage (100) comprend en outre un diffuseur (150) et un film optique (160), dans lequel le diffuseur (150) est disposé sur le substrat (110), et le film optique (160) est disposé sur le diffuseur (150).

11. Dispositif d'affichage (10, 10a) selon la revendication 10, dans lequel le diffuseur (150) est situé entre le panneau d'affichage (200) et le substrat (110), et une distance entre le diffuseur (150) et le substrat (110) est inférieure ou égale à 5 mm.
